# FASCICULE DE BREVET EUROPEEN

(11) **EP 3 298 173 B1**
(45) Date de publication et mention de la délivrance du brevet: **03.07.2019**
(21) Numéro de dépôt: 16727758.1
(22) Date de dépôt: 11.05.2016
(51) Int. Cl.: C22C 14/00, C22C 21/00, C22C 1/04, B22F 3/22, B22F 3/10, B22F 3/105, B22F 3/15

(54) **COMPOSITION POUR LA FABRICATION DE PIECES EN ALUMINURE DE TITANE PAR FRITTAGE DE POUDRE, ET PROCEDE DE FABRICATION METTANT EN UVRE UNE TELLE COMPOSITION**
ZUSAMMENSETZUNG ZUR HERSTELLUNG VON TEILEN AUS TITANALUMINID DURCH PULVERSINTERN UND HERSTELLUNGSVERFAHREN UNTER VERWENDUNG SOLCH EINER ZUSAMMENSETZUNG
COMPOSITION FOR MANUFACTURING PARTS FROM TITANIUM ALUMINIDE BY POWDER SINTERING, AND MANUFACTURING METHOD USING SUCH A COMPOSITION

(30) Priorité: 21.05.2015 FR 1554550
(43) Date de publication de la demande: 28.03.2018
(73) Titulaire: Safran Aircraft Engines, 75015 Paris (FR)
(72) Inventeur: KNITTEL, Stéphane, 77550 Moissy-Cramayel Cedex (FR); FRIBOURG, Guillaume, 77550 Moissy-Cramayel Cedex (FR)
(74) Mandataire: Cabinet Beau de Loménie
(86) Numéro de dépôt international: PCT/FR2016/051109
(87) Numéro de publication internationale: WO 2016/185115

(56) Documents cités:
- US-A- 5 032 353
- US-A1- 2002 085 941
- US-A1- 2010 015 463
- US-A1- 2011 103 994
- GERLING R ET AL: "Metal injection moulding of gamma titanium aluminide alloy powder", MATERIALS SCIENCE AND ENGINEERING A: STRUCTURAL MATERIALS: PROPERTIES, MICROSTRUCTURES AND PROCESSING, ELSEVIER BV, NL, vol. 423, no. 1-2, 15 mai 2006 (2006-05-15), pages 262-268, XP027952396, ISSN: 0921-5093 [extrait le 2006-05-15]

## Description

### Arrière-plan de l'invention

La présente invention se rapporte au domaine général des procédés de fabrication de pièces en alliages à base d'aluminures de titane. La présente invention s'applique plus particulièrement, mais non exclusivement, à la fabrication de pièces pour l'aéronautique.

Les alliages à base d'aluminures de titane sont aujourd'hui utilisés dans le domaine aéronautique notamment en raison des avantages qu'ils présentent pour la réduction du poids embarqué au sein des parties moyennement chaudes des turbomachines. En effet, ces alliages présentent généralement une densité moyenne de l'ordre de 4 g/cm² et constituent une alternative viable aux traditionnels alliages à base de nickel (dont la densité moyenne est d'environ 8,5 g/cm²). Leurs bonnes propriétés mécaniques et leur résistance à l'oxydation pour des températures n'excédant pas 750°C en font des candidats de choix, par exemple pour la fabrication d'aubages de la turbine basse pression des turbomachines aéronautiques.

De telles pièces en alliage à base d'aluminure de titane sont traditionnellement fabriquées par fonderie, ce qui induit des surcoûts liés à l'enlèvement de matière lorsque les pièces sont usinées.

Les techniques utilisant la métallurgie des poudres constituent une alternative intéressante aux techniques de fonderie traditionnelles pour réduire les coûts de production. Cependant, ces techniques font intervenir une étape de frittage à des températures très élevées, ce qui peut être limitant en pratique. En outre, la densité des pièces obtenues par métallurgie des poudres est parfois insuffisante pour certaines applications.

Par exemple, lorsque l'on souhaite obtenir le frittage complet (avec une densité supérieure à 95%) d'une poudre à base d'un aluminure de titane comme le TiAl48-2-2, il est nécessaire de se placer à des températures proches de la température de fusion de l'alliage, à savoir 1455°C environ. En pratique, pour le frittage, on se place généralement à des températures comprises entre 1380°C et 1450°C, ce qui rend le procédé de fabrication énergétiquement très couteux. De plus, les outillages utilisés pour réaliser le frittage de ces poudres, comme par exemple des fours régulés en température, doivent fonctionner à des températures proches de leurs limites d'utilisation, ce qui peut réduire leur durée de vie et augmenter les coûts de maintenance.

US2011/103994 divulgue une composition comprenant un alliage à base d'aluminure de titane et au moins 10% en masse d'une poudre d'addition.

### Objet et résumé de l'invention

La présente invention a donc pour but principal de pallier de tels inconvénients en proposant une composition destinée à être frittée pour fabriquer une pièce comprenant un alliage à base d'aluminure de titane, la composition comprenant une poudre d'alliage à base d'aluminure de titane, et une poudre d'addition comprenant un mélange d'une poudre d'aluminium métallique et d'une poudre de titane métallique, caractérisée en ce qu'elle comprend entre 0.5% et 5% en masse de poudre d'addition.

La composition selon l'invention est remarquable en ce qu'elle permet de réduire l'apport énergétique nécessaire pour le frittage, quelle que soit la technique de frittage utilisée. En effet, la poudre d'addition présente dans la composition va apporter, au cours de la montée en température, de l'énergie sous la forme de foyers locaux de chaleur répartis au sein de la composition.

Lorsque la température de la composition est proche de la température de fusion de l'aluminium métallique (environ 660°C), les grains de ce dernier commencent à fondre, et une réaction chimique entre l'aluminium métallique et le titane métallique s'amorce pour former un aluminure de titane. Cette réaction chimique est exothermique et apporte de l'énergie sous la forme de chaleur à la composition, que l'on peut contrôler en jouant sur la quantité de poudre d'addition ajoutée à la composition. Cet apport énergétique permet d'amorcer de façon précoce le frittage de la poudre d'alliage dès 660°C, alors qu'il débute généralement entre 900°C et 1000°C. Ainsi, la densification de la composition est déjà avancée lorsque la température du palier de frittage est atteinte, ce qui permet d'obtenir des densités de pièces plus élevées à l'issue du frittage.

La présence de ces foyers de chauffage *in-situ* dans la composition permet aussi de réduire la température du palier de frittage. Ainsi, on limite la dégradation des moyens de chauffe utilisés et l'énergie nécessaire pour réaliser le frittage (les moyens de chauffe peuvent par exemple consister en : un four régulé en température, un laser, un faisceau d'électrons, un chauffage plasma, etc.). De plus, la diminution de la température du palier de frittage permet de réduire le temps nécessaire pour atteindre ce palier, et donc de réduire la durée du cycle de frittage complet.

En utilisant la composition selon l'invention, un apport énergétique est réalisé *in-situ* et de façon homogène au sein de la composition. Contrairement aux compositions de l'art antérieur qui sont chauffées généralement par diffusion de l'extérieur vers l'intérieur, la température de la composition selon l'invention est augmentée simultanément et de façon homogène dans toute la composition grâce notamment à la réaction exothermique entre l'aluminium et le titane. Ainsi, le frittage est plus homogène en utilisant la composition selon l'invention.

La fusion des grains d'aluminium métallique à partir de 660°C joue aussi un rôle dans le maintien de la structure de la composition, qui est généralement mise en forme avant son frittage (par exemple en utilisant un liant organique et un procédé d'injection/moulage, ou par compression). En effet, les grains d'aluminium qui se liquéfient permettent aussi de conformer les grains qui les entourent et d'augmenter l'inter diffusion des différents éléments dans la composition, réalisant ainsi un « pré-frittage » de la composition. Ce pré-frittage permet aussi de minimiser les déformations de la composition qui peuvent survenir lors de l'étape de frittage, l'aluminium liquide jouant ainsi le rôle d'un liant métallique réactif pour les autres grains.

Enfin, l'ajout de la poudre d'addition comprenant de l'aluminium et du titane ne modifie sensiblement pas la composition chimique de l'alliage obtenu après frittage puisque la poudre d'addition va diffuser au sein de la composition et également former un aluminure de titane après réaction. Les propriétés physico-chimiques d'une pièce obtenue en frittant une composition selon l'invention sont donc très peu altérées par rapport à une pièce obtenue par frittage d'une poudre d'un alliage à base d'aluminure de titane seule.

Si la poudre d'alliage à base d'un aluminure de titane comprend des éléments d'addition (du chrome ou du niobium par exemple), ils peuvent être dilués dans la composition par la poudre d'addition. Il est alors possible d'ajouter si nécessaire de tels éléments à la composition selon l'invention pour rétablir leurs teneurs initiales dans l'alliage final.

La composition comprend entre 0,5% et 5% en masse de poudre d'addition. Ainsi, la teneur massique en poudre d'addition est suffisamment faible pour ne pas modifier outre mesure les propriétés physico-chimiques de l'alliage à base d'aluminure de titane dans la composition. La poudre d'addition peut jouer ainsi simplement le rôle d'un adjuvant de frittage pour la composition. Dans un exemple de réalisation, la composition peut comprendre entre 0,5% et 2% en masse de poudre d'addition.

De préférence, un ratio atomique Ti/Al de la poudre d'addition est compris entre 0,7 et 1,3 afin de ne pas modifier significativement la composition chimique de la poudre d'alliage à base d'aluminure de titane. Dans un exemple de réalisation, le ratio atomique Ti/Al dans la poudre d'addition peut être compris entre 0,8 et 1,2, voire compris entre 0,9 et 1,1.

De préférence également, une granulométrie moyenne de la poudre d'alliage à base d'aluminure de titane est comprise entre 1 µm et 100 µm, plus préférentiellement entre 5 µm et 50 µm.

Dans un mode de réalisation, la poudre d'addition présente une granulométrie moyenne sensiblement identique à celle de la poudre d'alliage à base d'aluminure de titane. En variante, la poudre d'addition peut présenter une granulométrie moyenne inférieure à celle de la poudre d'alliage à base d'aluminure de titane, afin de modifier la répartition des foyers de chaleurs au sein de la composition.

La poudre d'alliage à base d'aluminure de titane peut comprendre un aluminure de titane ayant une teneur massique en titane supérieure ou égale à 45% et une teneur massique en aluminium supérieure ou égale à 40%. Par exemple, ces alliages peuvent être du type TiAl-48-2-2, TNM, TNB, ou plus généralement faire partie de la famille des alliages à base d'aluminure de titane ayant des phases gamma/alpha2 ou beta/gamma/alpha2.

L'invention vise aussi un procédé de fabrication d'une pièce comprenant un aluminure de titane, le procédé comprenant les étapes suivantes :
- la préparation d'une composition telle que celle décrite précédemment, et
- le frittage de la composition.

Selon un mode de réalisation, le procédé peut comprendre en outre, avant l'étape de frittage, une étape de mise en forme de la composition afin d'obtenir une préforme de la pièce à fabriquer.

Lorsque l'on utilise par exemple une technique de moulage par injection de poudre métallique (aussi appelée MIM ou « Metal Injection Molding), l'étape de mise en forme de la composition peut comprendre les sous-étapes suivantes :
- l'injection dans un moule d'un mélange de la composition avec un liant afin d'obtenir une ébauche de la pièce à fabriquer, et
- le déliantage de l'ébauche afin d'obtenir la préforme de la pièce à fabriquer.

L'étape de frittage peut être réalisée :
- dans un four régulé en température,
- par frittage flash (aussi appelé SPS ou « Spark Plasma Sintering »),
- par frittage sélectif sur lit de poudre (par exemple par EBM ou « Electron Beam Melting », ou encore par SLS ou « Selective Laser Sintering »), ou
- par compression isostatique à chaud (aussi appelé HIP ou « Hot Isostatic Pressing »).

Il est avantageux de réaliser l'étape de frittage sous atmosphère neutre d'argon, pour réduire notamment le risque d'oxydation de l'aluminium métallique et du titane métallique présents dans la composition.

Enfin, l'invention vise aussi un procédé tel que celui décrit précédemment dans lequel la pièce à fabriquer est une pièce pour l'aéronautique. Par « pièce pour l'aéronautique » on entend une pièce pouvant être utilisée dans un turboréacteur destiné à propulser un aéronef, par exemple : une aube de turbomachine aéronautique, un anneau de turbine, un distributeur basse pression, un système d'injection de chambre à combustion aéronautique, un composant de système d'injection aéronautique, une bride, un système de bridage, un support d'équipements moteur, un capot, etc.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A à 1D représentent schématiquement l'évolution d'une composition selon l'invention au cours d'un procédé selon un mode de réalisation de l'invention, et
- la figure 2 est un ordinogramme montrant les différentes étapes d'un procédé selon l'invention.

### Description détaillée de l'invention

L'invention va maintenant être décrite dans son application à la fabrication d'une pièce en alliage à base d'aluminure de titane par un procédé MIM (« Metal Injection Molding »). Bien entendu, l'invention peut s'appliquer à toute technique de fabrication de pièces mettant en oeuvre le frittage d'une poudre d'un alliage à base d'aluminure de titane.

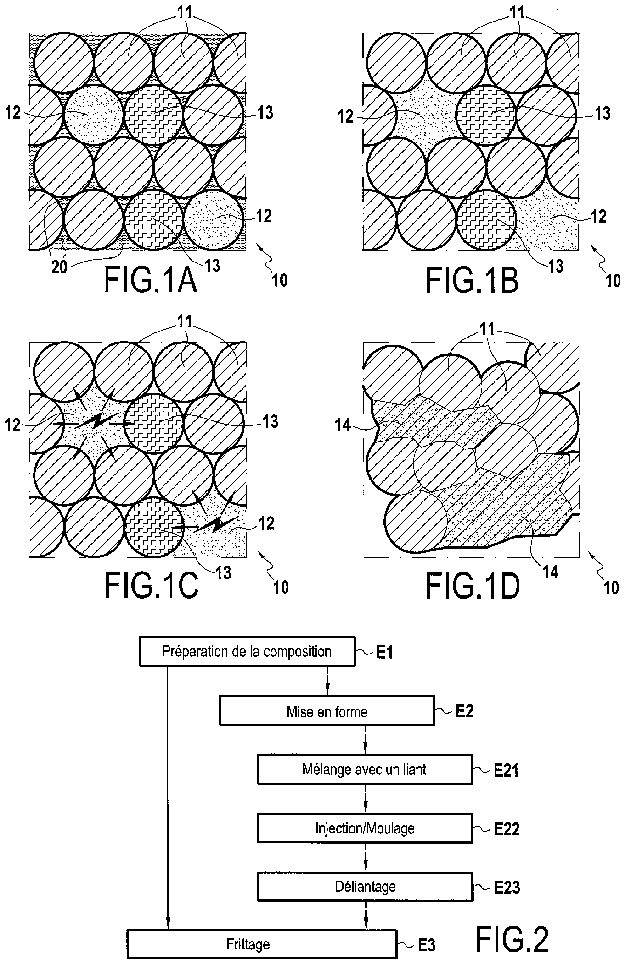

Les étapes d'un procédé selon un mode de réalisation de l'invention sont représentées schématiquement sur l'ordinogramme de la figure 2.

Tout d'abord, une poudre d'aluminure de titane est mélangée (étape E1) avec une poudre d'addition comprenant une poudre d'aluminium métallique et une poudre de titane métallique pour former une composition selon l'invention.

On pourra par exemple utiliser une poudre d'un alliage TiAl-48-2-2 ayant une granulométrie moyenne comprise entre 5 µm et 50 µm. Les poudres d'aluminium métallique et de titane métallique peuvent quant à elles avoir une granulométrie moyenne de l'ordre de celle de la poudre d'alliage à base d'aluminure de titane (par exemple de +/- 50% en taille par rapport à celle de la poudre d'alliage).

On veillera à ce que la teneur en masse de la composition en poudre d'addition soit comprise entre 0,5% et 5%, voire comprise entre 0,5% et 2%. En outre, le ratio atomique Ti/Al de la poudre d'addition, c'est-à-dire dans la poudre d'addition, est de préférence compris entre 0,7 et 1,3.

L'alliage à base d'aluminure de titane peut comprendre des éléments d'addition, comme par exemple du chrome ou du niobium dans le cas d'un alliage TiAl-48-2-2. Lorsque l'on ajoute de la poudre d'addition à de la poudre d'alliage, la teneur massique en ces éléments d'addition peut être légèrement réduite dans la composition par rapport à leur teneur massique dans la poudre d'alliage initiale. Par conséquent, on veillera à ajouter si besoin des éléments d'addition à la composition pour que leur teneur reste sensiblement identique à celle de la poudre d'alliage initiale.

Il est important de mélanger correctement toutes les poudres pour s'assurer de l'homogénéité de la composition. Par exemple, on peut utiliser un mélangeur automatisé pendant 1 heure à 2 heures. De plus, il est préférable d'effectuer l'étape de mélange sous atmosphère neutre, par exemple d'argon, car les métaux non alliés comme le titane métallique et l'aluminium métallique ont tendance à s'oxyder rapidement à l'air libre, surtout lorsque les granulométries des poudres sont faibles.

De façon générale dans tout le procédé, on veillera à limiter l'exposition de la composition au dioxygène en se plaçant sous atmosphère neutre pour limiter son oxydation.

Une fois la composition préparée par mélange, on procède à sa mise en forme (étape E2). La mise en forme de la composition permet d'obtenir une préforme de la pièce qui sera ensuite frittée (d'autres procédés ne font pas intervenir une telle étape de mise en forme, comme par exemple les frittages sur lit de poudre).

Dans le cas d'un procédé MIM, la mise en forme de la composition comprend d'abord le mélange de la composition avec un liant (étape E21).

Le liant peut, de façon connue en soi, comporter un composé choisi parmi : les paraffines, les résines thermoplastiques, les résines thermodurcissables, le gel d'agar, la cellulose, le polyéthylène, le polyéthylène glycol, le polypropylène, l'acide stéarique, le polyoxyméthylène, et leurs mélanges.

Une fois la composition mélangée avec un liant et portée à une température permettant son injection, elle est injectée (étape E22) dans un moule régulé en température (le moule ayant la forme de la pièce à fabriquer). Une fois l'injection terminée, le refroidissement par le moule du mélange injecté permet d'obtenir une ébauche de la pièce dans un état plastique.

La figure 1A représente schématiquement la disposition de grains de poudre de la composition 10 au sein de l'ébauche à l'état plastique. On y a représenté des grains de poudre d'alliage à base d'aluminure de titane 11, des grains de poudre d'aluminium métallique 12, des grains de poudre de titane métallique 13, ainsi qu'un liant 20 (ou un mélange de liants) dans lequel la composition 10 est noyée.

L'étape suivante est le déliantage de l'ébauche (étape E23), qui consiste à éliminer sélectivement le liant ou le mélange de liants présent dans l'ébauche ainsi formée. On peut, de façon connue en soi, réaliser un déliantage chimique à l'aide d'un solvant par exemple, suivi d'un déliantage thermique.

Le déliantage thermique consiste généralement à soumettre l'ébauche à plusieurs paliers de températures sous atmosphère neutre afin d'éliminer successivement les liants présents. La température du palier le plus élevé ne dépasse généralement pas les 700°C.

Durant le déliantage thermique, les grains d'aluminium métallique 12 peuvent commencer à perdre leur ductilité et conformer les différents grains de la composition 10 entre eux.

La figure 1B montre l'état de la composition 10 selon l'invention à la fin de l'étape de déliantage ou au début de la montée en température pour l'étape de frittage (étape E3).

Sur cette figure, la température de la composition 10 a dépassé 660°C, qui correspond à la température de fusion de l'aluminium métallique. On voit que le liant 20 n'est plus présent, et que les grains d'aluminium 12 commencent à fondre et conforment les grains 11, 13 les entourant. La fusion de l'aluminium permet ainsi de consolider la préforme obtenue après déliantage de l'ébauche, et d'empêcher sa déformation.

En même temps que sa fusion, l'aluminium métallique va réagir notamment avec le titane métallique (figure 1C) pour former un aluminure de titane du type TiₓAl_{y}, x et y dépendant notamment du ratio atomique Ti/Al de la poudre d'addition (qui est de préférence compris entre 0,7 et 1,3). L'aluminium peut également réagir avec l'alliage à base d'aluminure de titane déjà présent. Ces réactions chimiques, exothermiques, permettent d'apporter de l'énergie sous forme de chaleur au sein même de la préforme. L'énergie ainsi dégagée *in situ* par ces foyers locaux est répartie de façon homogène dans la préforme parce que la composition a préalablement été bien mélangée (étape E1).

Le dégagement de chaleur *in-situ* par la réaction entre l'aluminium métallique et le titane métallique permet d'amorcer le frittage et d'entamer la densification de la préforme dès que la température approche puis dépasse les 660°C environ.

Il est possible de contrôler ce phénomène précisément car la quantité d'énergie dégagée par les réactions *in situ* augmente avec la quantité de poudre d'addition dans la composition.

La montée en température pour l'étape de frittage (étape E3) se poursuit jusqu'à atteindre un palier de frittage, dont la température peut être réduite grâce à l'utilisation de la composition 10 selon l'invention. En effet, l'énergie à apporter à la préforme pour la fritter est d'autant réduite que de l'énergie a été déjà apportée par la réaction exothermique présentée précédemment.

Lors de la montée en température, et pendant le palier de frittage, des phénomènes d'inter-diffusion, notamment entre l'aluminium métallique et l'aluminure de titane déjà présent se produisent, ce qui favorise encore le frittage de la préforme.

Tout comme la préparation de la composition (étape E1) et la mise en forme de la composition (étape E2), il est préférable de réaliser le frittage (étape E3) sous atmosphère neutre d'argon pour empêcher l'oxydation des métaux non alliés.

La figure 1D illustre schématiquement l'état de la composition 10 suite à l'étape de frittage. On voit que la densification est terminée, et que des phases d'aluminure de titane du type TiₓAl_{y} 14, issues notamment de la réaction entre l'aluminium métallique 12 et le titane métallique 13, sont présentes.

Afin de s'assurer de l'homogénéité et de la stabilité de l'alliage obtenu, il est également possible de réaliser un traitement thermique post-frittage de diffusion.

L'invention peut aussi s'appliquer à des procédés du type SPS ou frittage flash, et HIP ou compression isostatique à chaud. Dans ces procédés, la mise en forme et le frittage de la pièce sont réalisés simultanément. La montée en température va entraîner les réactions chimiques exothermiques présentées précédemment, et permettre d'obtenir une meilleure densification de la pièce et de diminuer la consommation d'énergie du cycle de frittage.

Enfin, l'invention peut également s'appliquer à des procédés du type fabrication additive mettant en oeuvre un frittage sur lit de poudre, qu'il soit par exemple par laser (SLS) ou par faisceau d'électron (EBM). Ces procédés ne nécessitent pas une étape de mise en forme de la composition. La composition selon l'invention est avantageuse dans ce type de procédés en ce qu'elle permet de réduire l'énergie fournie lors du frittage (en réduisant l'intensité du faisceau d'électrons ou du laser par exemple).

### Exemple

On réalise une aube de turbine basse pression pour turbomachine aéronautique par un procédé MIM.

On prépare tout d'abord une composition conforme à l'invention comprenant, en masse :
- 1% d'une poudre d'addition ayant une granulométrie moyenne de 18 µm, comprenant de l'aluminium métallique et du titane métallique avec un ratio atomique Ti/Al sensiblement égal à 1, et
- 99% d'une poudre préalliée de TiAl-48-2-2 ayant granulométrie moyenne de 18 µm.

Cette composition est mélangée dans un mélangeur automatique pendant 2 heures sous atmosphère neutre d'argon.

On mélange ensuite la composition avec un liant composé majoritairement de cire de paraffine, de poly(éthylène-acétate de vinyle) et d'acide stéarique. Le liant représente environ 40% en volume du mélange.

Le mélange est injecté dans la cavité d'un moule dont la température est régulée à 120°C.

L'ébauche à l'état plastique est démoulée puis immergée dans un bain d'hexane à 40°C pendant 10 heures pour éliminer une partie du liant par dissolution.

On effectue ensuite le déliantage thermique de l'ébauche dans un four régulé en température, sous atmosphère neutre d'argon, par paliers successifs à 250°C pendant 2 heures, et 400°C pendant 2 heures, avec une rampe de montée en température à 2°C/minute.

Le palier de frittage à 1350°C est ensuite atteint par une rampe de montée à 5°C/min. Le palier de frittage est maintenu pour une durée de 4 heures. On refroidit ensuite la pièce par une rampe de descente à 5°C/min.

On place enfin la pièce à 1380°C pendant 10 heures pour réaliser un traitement thermique post-frittage de diffusion.

Grâce à un tel procédé, la densité de la pièce obtenue atteint typiquement 95%, et la température du palier de frittage peut être abaissée typiquement de 30°C à 60°C.

## Revendications

1. Composition (10) destinée à être frittée pour fabriquer une pièce comprenant un alliage à base d'aluminure de titane, la composition comprenant une poudre d'alliage à base d'aluminure de titane (11), et une poudre d'addition comprenant un mélange d'une poudre d'aluminium métallique (12) et d'une poudre de titane métallique (13), **caractérisée en ce qu'**elle comprend entre 0,5% et 5% en masse de poudre d'addition.

2. Composition selon la revendication 1, **caractérisée en ce qu'**elle comprend entre 0,5% et 2% en masse de poudre d'addition.

3. Composition selon l'une quelconque des revendications 1 et 2, **caractérisée en ce qu'**un ratio atomique Ti/Al de la poudre d'addition est compris entre 0,7 et 1,3.

4. Composition selon l'une quelconque des revendications 1 à 3, **caractérisée en ce qu'**une granulométrie moyenne de la poudre d'alliage à base d'aluminure de titane (11) est comprise entre 1 µm et 100 µm.

5. Composition selon l'une quelconque des revendications 1 à 4, **caractérisée en ce que** la poudre d'addition présente une granulométrie moyenne identique à celle de la poudre d'alliage à base d'aluminure de titane (11).

6. Composition selon l'une quelconque des revendications 1 à 5, **caractérisée en ce que** la poudre d'alliage à base d'aluminure de titane (11) comprend un aluminure de titane ayant une teneur massique en titane supérieure ou égale à 45% et une teneur massique en aluminium supérieure ou égale à 40%.

7. Procédé de fabrication d'une pièce comprenant de l'aluminure de titane, le procédé comprenant les étapes suivantes :
- la préparation (E1) d'une composition (10) selon l'une quelconque des revendications 1 à 6, et
- le frittage (E3) de la composition.

8. Procédé selon la revendication 7, **caractérisé en ce que** le procédé comprend en outre, avant l'étape de frittage, une étape de mise en forme de la composition (E2) afin d'obtenir une préforme de la pièce à fabriquer.

9. Procédé selon la revendication 8, **caractérisé en ce que** l'étape de mise en forme de la composition (E2) comprend les sous-étapes suivantes :
- l'injection (E22) dans un moule d'un mélange de la composition (10) avec un liant (20) afin d'obtenir une ébauche de la pièce à fabriquer, et
- le déliantage (E23) de l'ébauche afin d'obtenir la préforme de la pièce à fabriquer.

10. Procédé selon l'une quelconque des revendications 7 à 9, **caractérisé en ce que** l'étape de frittage (E3) est réalisée :
- dans un four régulé en température,
- par frittage flash,
- par frittage sélectif sur lit de poudre, ou
- par compression isostatique à chaud.

11. Procédé selon l'une quelconque des revendications 7 à 10, **caractérisé en ce que** l'étape de frittage (E3) est réalisée sous atmosphère neutre d'argon.

12. Procédé selon l'une quelconque des revendications 7 à 11, **caractérisé en ce que** la pièce à fabriquer est une pièce pour l'aéronautique.

## Patentansprüche

1. Zusammensetzung (10), die dazu bestimmt ist, gesintert zu werden, um ein Teil, das eine Legierung auf Basis von Titanaluminid umfasst, herzustellen, wobei die Zusammensetzung ein Pulver aus einer Legierung auf Basis von Titanaluminid (11) und ein Zusatzpulver umfasst, welches eine Mischung aus einem metallischen Aluminiumpulver (12) und einem metallischen Titanpulver (13) umfasst, **dadurch gekennzeichnet, dass** sie zwischen 0,5 und 5 Masse-% Zusatzpulver enthält.

2. Zusammensetzung nach Anspruch 1, **dadurch gekennzeichnet, dass** sie zwischen 0,5 und 2 Masse-% Zusatzpulver enthält.

3. Zusammensetzung nach einem der Ansprüche 1 und 2, **dadurch gekennzeichnet, dass** ein Ti/Al-Atomverhältnis des Zusatzpulvers im Bereich zwischen 0,7 und 1,3 liegt.

4. Zusammensetzung nach einem der Ansprüche 1 bis 3, **dadurch gekennzeichnet, dass** eine mittlere Körngröße des Pulvers aus Legierung auf Basis von Titanaluminid (11) zwischen 1 µm und 100 µm liegt.

5. Zusammensetzung nach einem der Ansprüche 1 bis 4, **dadurch gekennzeichnet, dass** das Zusatzpulver eine mittlere Korngröße aufweist, die mit derjenigen des Pulvers aus Legierung auf Basis von Titanaluminid (11) identisch ist.

6. Zusammensetzung nach einem der Ansprüche 1 bis 5, **dadurch gekennzeichnet, dass** das Pulver aus Legierung auf Basis von Titanaluminid (11) ein Titanaluminid mit einem Titanmassengehalt von mehr als oder gleich 45 % und einem Aluminiummassengehalt von mehr als oder gleich 40 % umfasst.

7. Verfahren zur Herstellung eines Teils, das Titanaluminid umfasst, wobei das Verfahren die folgenden Schritte umfasst:
- die Zubereitung (E1) einer Zusammensetzung (10) nach einem der Ansprüche 1 bis 6 und
- das Sintern (E3) der Zusammensetzung.

8. Verfahren nach Anspruch 7, **dadurch gekennzeichnet, dass** das Verfahren vor dem Sinterschritt ferner einen Schritt des Informbringens der Zusammensetzung (E2) umfasst, um einen Vorformling des herzustellenden Teils zu erhalten.

9. Verfahren nach Anspruch 8, **dadurch gekennzeichnet, dass** der Schritt des Informbringens der Zusammensetzung (E2) die folgenden Unterschritte umfasst:
- das Einspritzen (E22) einer Mischung der Zusammensetzung (10) mit einem Bindemittel (20) in eine Form, um einen Rohling des herzustellenden Teils zu erhalten, und
- das Entbindern (E23) des Rohlings, um den Vorformling des herzustellenden Teils zu erhalten.

10. Verfahren nach einem der Ansprüche 7 bis 9, **dadurch gekennzeichnet, dass** der Sinterschritt (E3) durchgeführt wird:
- in einem temperaturgeregelten Ofen,
- durch Flash-Sinterung,
- durch selektives Sintern auf einem Pulverbett oder
- durch heißisostatisches Pressen.

11. Verfahren nach einem der Ansprüche 7 bis 10, **dadurch gekennzeichnet, dass** der Sinterschritt (E3) unter neutraler Argonatmosphäre durchgeführt wird.

12. Verfahren nach einem der Ansprüche 7 bis 11, **dadurch gekennzeichnet, dass** das herzustellende Teil ein Teil für die Luftfahrt ist.

## Claims

1. A composition (10) for sintering to fabricate a part comprising an alloy based on titanium aluminide, the composition comprising a powder (11) of an alloy based on titanium aluminide, and an addition powder comprising a mixture of a metallic aluminum powder (12) and of a metallic titanium powder (13), the composition being **characterized in that** it includes 0.5% to 5% by weight of addition powder.

2. A composition according to claim 1, **characterized in that** it includes 0.5% to 2% by weight of addition powder.

3. A composition according to claim 1 or claim 2, **characterized in that** the Ti/Al atomic ratio of the addition powder lies in the range 0.7 to 1.3.

4. A composition according to any one of claims 1 to 3, **characterized in that** the powder (11) of titanium aluminide based alloy has a mean grain size lying in the range 1 µm to 100 µm.

5. A composition according to any one of claims 1 to 4, **characterized in that** the addition powder presents a mean grain size identical to that of the powder (11) of titanium aluminide based alloy.

6. A composition according to any one of claims 1 to 5, **characterized in that** the powder (11) of titanium aluminide based alloy comprises a titanium aluminide having a content by weight of titanium greater than or equal to 45% and a content by weight of aluminum greater than or equal to 40%.

7. A method of fabricating a part comprising titanium aluminide, the method comprising the following steps:
• preparing (E1) a composition (10) according to any one of claims 1 to 6; and
• sintering (E3) the composition.

8. A method according to claim 7, **characterized in that** the method further comprises, before the sintering step, a step of shaping (E2) the composition in order to obtain a preform of the part to be fabricated.

9. A method according to claim 8, **characterized in that** the step of shaping (E2) the composition comprises the following sub-steps:
• injecting (E22) a mixture of the composition (10) and a binder (20) into a mold in order to obtain a blank of the part to be fabricated; and
• debinding (E23) the blank in order to obtain the preform of the part to be fabricated.

10. A method according to any one of claims 7 to 9, **characterized in that** the step of sintering (E3) is performed:
• in a temperature-regulated oven;
• by flash sintering;
• by selective sintering on a powder bed; or
• by hot isostatic pressing.

11. A method according to any one of claims 7 to 10, **characterized in that** the step of sintering (E3) is performed under an inert atmosphere of argon.

12. A method according to any one of claims 7 to 11, **characterized in that** the part to be fabricated is a part for aviation.
